# EUROPEAN PATENT APPLICATION

(11) **EP 4 753 275 A1**
(43) Date of publication of application: **03.06.2026**
(21) Application number: 25219111.9
(22) Date of filing: 27.11.2025
(51) Int. Cl.: H04N 23/63, H04N 23/65, H04N 23/667, H04N 23/611, G06T 19/00

(54) **METHOD FOR DETERMINING IMAGE FOR DISPLAY AND ELECTRONIC DEVICE**

(30) Priority: 30.11.2024 CN 202411753567
(71) Applicant: Lenovo (Beijing) Limited, Beijing 100085 (CN)
(72) Inventor: XIAO, Qihua, Beijing, 100085 (CN)
(74) Representative: Boult Wade Tennant LLP

(57) **Abstract**

The present disclosure discloses a method for determining an image for display, applied to an electronic device. The method includes: in response to switching to a first mode of the electronic device, acquiring, by an image acquisition unit of the electronic device, a first image or a second image, the first image or the second image being different from an image of an environment of the electronic device; in response to switching to a second mode of the electronic device, acquiring, by the image acquisition unit, the image of the environment of the electronic device; in response to switching to a third mode of the electronic device, the image acquisition unit being in an OFF state; and outputting, by the image acquisition unit, an acquired image for display, or outputting, by the image acquisition unit, the acquired image to an application running on the electronic device.

## Description

### CROSS-REFERENCES TO RELATED APPLICATIONS

The present disclosure claims priority to Chinese Patent Application No. 202411753567.6, filed on November 30, 2024, the content of which is incorporated herein by reference in its entirety.

### TECHNICAL FIELD

The present disclosure relates to the field of image processing, and more specifically, relates to a method and a device for determining an image for display.

### BACKGROUND

Currently, for personal computers (PCs), a camera is controlled by a two-position selector switch, including an ON position and an OFF position. When the selector switch is in the ON position, a camera of the PC is in an ON state so as to perform acquisition of actual data; and, when the selector switch is in an OFF position, a built-in camera of the PC is in an OFF state. When a user does not wish to present actual environmental data or the user's own actual image while using the camera, existing on-device cameras of PCs are unable to address this required functionality.

### SUMMARY

One aspect of the present disclosure provides a method for determining an image for display, applied to an electronic device. The method includes: in response to switching to a first mode of the electronic device, acquiring, by an image acquisition unit of the electronic device, a first image or a second image, the first image or the second image being different from an image of an environment of the electronic device; in response to switching to a second mode of the electronic device, acquiring, by the image acquisition unit, the image of the environment of the electronic device; in response to switching to a third mode of the electronic device, the image acquisition unit being in an OFF state; and outputting, by the image acquisition unit, an acquired image for display, or outputting, by the image acquisition unit, the acquired image to an application running on the electronic device, such that the application displays the acquired image.

Another aspect of the present disclosure provides an electronic device. The electronic device includes a body and an image acquisition unit. The image acquisition unit is arranged in the body, and the body includes a position selector switch switchable among different positions. In response to the position selector switch being moved to a first position, the electronic device operates in a first mode, and the image acquisition unit acquires a first image or a second image, the first image or the second image being different from an image of an environment of the electronic device; in response to the position selector switch being moved to a second position, the electronic device operates in a second mode, and the image acquisition unit acquires the image of the environment of the electronic device; and in response to the position selector switch being moved to a third position, the electronic device operates in a third mode, and the image acquisition unit is in an OFF state.

### BRIEF DESCRIPTION OF THE DRAWINGS

The drawings described herein are incorporated into and constitute a part of the specification. These drawings illustrate embodiments consistent with the present disclosure and, together with the description, are provided to explain technical solutions of the present disclosure.
FIG. 1 illustrates a schematic flowchart for implementing a method for determining an image for display in accordance with some embodiments of the present disclosure.
FIG. 2 illustrates a schematic flowchart for implementing a method for determining an image for display in accordance with some embodiments of the present disclosure.
FIG. 3A illustrates a schematic diagram of a position selector switch in accordance with some embodiments of the present disclosure.
FIG. 3B illustrates a schematic diagram of a position selector switch in accordance with some embodiments of the present disclosure.
FIG. 4 illustrates a schematic flowchart for implementing a virtual-person position of the position selector switch in accordance with some embodiments of the present disclosure.
FIG. 5A illustrates a schematic diagram of a virtual-person position in accordance with some embodiments of the present disclosure.
FIG. 5B illustrates a schematic diagram of a virtual-person position in accordance with some embodiments of the present disclosure.
FIG. 5C illustrates a schematic diagram of a virtual-person position in accordance with some embodiments of the present disclosure.
FIG. 6 illustrates a schematic structure diagram of an apparatus for determining an image for display in accordance with some embodiments of the present disclosure.
FIG. 7 illustrates a schematic diagram of hardware of an electronic device in accordance with some embodiments of the present disclosure.

### DETAILED DESCRIPTION

In order to make the objectives, technical solutions, and advantages of the present disclosure more apparent, the technical solutions of the present disclosure are further described in detail below with reference to the drawings and embodiments. The described embodiments should not be construed as limiting the present disclosure. All other embodiments acquired by those of ordinary skill in the art without creative efforts fall within the scope of protection of the present disclosure.

In the following description, references to "some embodiments" describe a subset of all possible embodiments. It is understood that "some embodiments" may represent the same or different subsets of all possible embodiments and may be combined with one another where there is no conflict. The terms "first/second/third" are used merely to distinguish similar objects and do not indicate a particular order. It is understood that, where permitted, "first/second/third" may be interchanged in specific order or sequence so that the embodiments of the present disclosure may be implemented in orders other than those illustrated or described herein.

Unless otherwise specified, all technical and scientific terms used herein have the same meaning as commonly understood by those skilled in the art to which the present disclosure pertains. The terminology used herein is for the purpose of describing the present disclosure and is not intended to limit the present disclosure.

Currently, for personal computers (PCs), a camera is controlled by a two-position selector switch, including an ON position and an OFF position. When the selector switch is in the ON position, a camera of the PC is in an ON state so as to acquire actual data; when the selector switch is in the OFF position, a built-in camera of the PC is in an OFF state. When a user does not wish to display actual environmental data or the user's own actual image while using the camera, existing on-device cameras of PCs are unable to address this required functionality.

According to some embodiments of the present disclosure, a method for determining display data is provided. The method may be executed by a processor of an electronic device. The electronic device may refer to devices having data processing capability, including servers, laptop computers, tablet computers, desktop computers, smart televisions, set-top boxes, and mobile devices (for example, mobile phones, portable video players, personal digital assistants, dedicated messaging devices, and portable gaming devices).

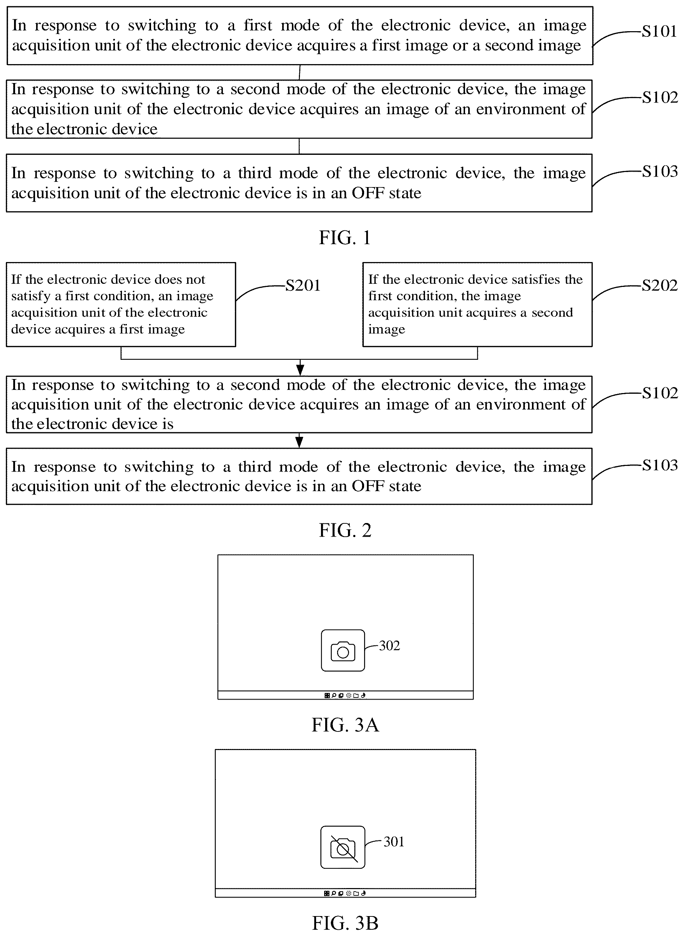

FIG. 1 illustrates a schematic flow for implementing a method for determining an image for display in accordance with some embodiments of the present disclosure. As shown in FIG. 1, the method includes steps S101, S102, and S103. The steps shown in FIG. 1 are described with reference to FIG. 1.

Step S101: in response to switching to a first mode of the electronic device, an image acquisition unit of the electronic device acquires a first image or a second image.

The first image or the second image is different from an image of an environment of the electronic device.

In some embodiments of the present disclosure, the electronic device may be a device having data processing capability and image acquisition capability, such as servers, laptop computers, tablet computers, desktop computers, smart televisions, set-top boxes, and mobile devices (for example, mobile phones, portable video players, personal digital assistants, dedicated messaging devices, and portable gaming devices).

In some embodiments of the present disclosure, an electronic device may be provided with a position selector switch corresponding to a first mode, and a position of the electronic device may be switched to the position corresponding to the first mode via touch input or by toggling the position selector switch.

In some embodiments of the present disclosure, the electronic device may further be switched to the first mode based on a shortcut key; or the electronic device may be switched to the first mode via voice, a mouse, or the like.

In some embodiments of the present disclosure, an image acquisition unit of the electronic device may be a camera arranged within the electronic device, for example, a camera integrated into hardware of a laptop computer.

In some embodiments of the present disclosure, the first mode may be a virtual-person mode of the electronic device. When switched to the virtual-person mode of the electronic device, a virtual image is acquired via the image acquisition unit of the electronic device in place of an image of a real environment.

In some embodiments of the present disclosure, the first image may be a preset image or an image saved by a user at an earlier time; the second image may be a preset image or an image saved by the user at an earlier time. If the first image is the preset image, the second image is the image saved by the user at the earlier time; and if the first image is the image saved by the user at the earlier time, the second image is the preset image. The preset image may be a generic image, for example, an image (icon) indicating the mode. The electronic device may provide a plurality of preset images for user selection.

In some embodiments of the present disclosure, when switching to a first mode of the electronic device, data acquired by an image acquisition unit is not an image of a real environment, but rather a preset image or an image saved by a user at an earlier time, in place of the image of the real environment.

Step S102: in response to switching to a second mode of the electronic device, the image acquisition unit of the electronic device acquires an image of an environment of the electronic device.

In some embodiments of the present disclosure, the electronic device may be provided with a position selector switch corresponding to the second mode, and a position of the electronic device may be switched to the position corresponding to the second mode via touch input or by toggling the position selector switch.

In some embodiments of the present disclosure, the electronic device may be switched to the second mode based on a shortcut key; or the electronic device may be switched to the second mode via voice, a mouse, or the like.

In some embodiments of the present disclosure, the second mode of the electronic device may be an operating mode of the electronic device, i.e., a normal ON state for the image acquisition unit. It is understood that, in response to switching to the operating mode of the electronic device, the image acquisition unit of the electronic device is in the normal ON state, and, based on the image acquisition unit in the normal ON state, an image of the environment of the electronic device is acquired.

By way of example, the electronic device is a laptop computer, the image acquisition unit is a camera arranged on the laptop computer, and the second mode is an ON mode of the camera of the laptop computer, so that actual data of an environment, where the laptop computer is located, is acquired based on the camera in the ON mode.

Step S103: in response to switching to a third mode of the electronic device, the image acquisition unit of the electronic device is in an OFF state.

The image acquisition unit outputs an acquired image for display, or outputs the acquired image to an application of the electronic device so that the application displays the image.

In some embodiments of the present disclosure, a position selector switch corresponding to the third mode may be provided on the electronic device, and a position of the electronic device may be switched to the position corresponding to the third mode via touch input or by toggling the position selector switch.

In some embodiments of the present disclosure, the electronic device may further be switched to the third mode based on a shortcut key; or the electronic device may be switched to the third mode via voice, a mouse, or the like.

In some embodiments of the present disclosure, the third mode is a shutdown mode of the electronic device, i.e., an image acquisition unit on the electronic device is in the OFF state, and an image acquisition unit in the OFF state is unable to acquire data.

By way of example, a camera of a laptop computer is switched to an OFF mode.

In some embodiments of the present disclosure, a first image or a second image acquired by the image acquisition unit of the electronic device in the first mode is used as display data, or a real environmental image acquired by the image acquisition unit of the electronic device in the second mode is used as display data.

In some embodiments of the present disclosure, display data corresponding to the first image or the second image may be displayed in real time by a built-in application of the electronic device; or, display data corresponding to the real environment may be displayed in real time.

By way of example, based on a camera application on a laptop computer, display data corresponding to the first image or the second image may be displayed in real time, or display data corresponding to the image of the real environment may be displayed in real time.

In some embodiments of the present disclosure, third-party application software running on the electronic device (for example, video software, conferencing software, video processing software, and the like) may invoke display data corresponding to the first image or the second image for real-time display; or, display data corresponding to the image of the real environment may be invoked for real-time display.

In some embodiments of the present disclosure, by switching the electronic device to the first mode, a first image or a second image is acquired, the first image or the second image being different from an image of the environment of the electronic device; by switching the electronic device to a second mode to acquire a real image of an environment of the electronic device; and by switching the electronic device to a third mode to place an image acquisition unit of the electronic device in an OFF state. By switching the electronic device from the second mode or the third mode to the first mode, when outputting an image acquired by the image acquisition unit for display, the first image or the second image that differs from the image of the environment of the electronic device is used in place of the image of the environment of the electronic device, thereby improving user privacy while enhancing user experience.

FIG. 2 illustrates a schematic flowchart for implementing a method for determining an image for display in accordance with some embodiments of the present disclosure. The method may be executed by a processor of an electronic device. Based on FIG. 1, step S101 in FIG. 1 may be updated to step S201 or step S202. The steps shown in FIG. 2 are described with reference to FIG. 2.

Step S201: if the electronic device does not satisfy a first condition, an image acquisition unit of the electronic device acquires a first image.

In some embodiments of the present disclosure, the first image may be an image preloaded in an on-screen display (OSD) of the electronic device.

In some embodiments of the present disclosure, the second image may be an image selected by a user or an image selected by the user at an earlier time.

In some embodiments of the present disclosure, the first condition may be that the electronic device has completed loading the second image.

In some embodiments of the present disclosure, it is understood that, if the electronic device has not completed loading the second image, the first image preloaded in the OSD of the electronic device is acquired.

Step S202: if the electronic device satisfies the first condition, the image acquisition unit acquires the second image.

In some embodiments, the second image is different from the first image.

In some embodiments of the present disclosure, if the electronic device has completed loading the second image, the second image being selected by the user or being selected by the user at an earlier time is acquired.

In some embodiments of the present disclosure, the first image is an image having a fixed pattern or a fixed texture. For example, the first image includes a virtual human face formed by simple lines, an image in the second image may be an animated character, a cartoon character, or another image different from the first image.

In some embodiments of the present disclosure, when the electronic device switches to the first mode, whether the second image has finished loading is used to determine whether to acquire the first image or the second image. If the second image has finished loading, the second image is acquired; and if the second image has not finished loading, the first image is acquired. Thus, when the second image has not finished loading, a preloaded first image is displayed first so as to avoid display stuttering caused by waiting for the second image to load.

In some embodiments of the present disclosure, the first condition includes: the electronic device loading a target model. The step S201 is implemented as follows.

If the target model is not loaded, an image acquisition unit of the electronic device acquires the first image.

In some embodiments of the present disclosure, the target model stores a plurality of images. If the target model has not finished loading, i.e., the plurality of images have not finished loading, the image acquisition unit of the electronic device acquires the preloaded first image and uses the first image as display data.

In some embodiments of the present disclosure, third-party application software running on the electronic device (for example, video software, conferencing software, video processing software, and the like) or software built into the electronic device (such as a camera application) invokes display data corresponding to the first image for real-time display.

The above step S202 may be implemented as follows.

If the target model is loaded, an image acquisition unit of the electronic device acquires a second image. The target model is used to determine the second image and provides the second image to the image acquisition unit.

The second image is an image stored by the target model, or an image generated based on user characteristics.

In some embodiments of the present disclosure, the target model includes a plurality of images.

In some embodiments of the present disclosure, when the electronic device switches to the first mode, it is determined whether the target model has finished loading. If the target model has finished loading and no user is detected, a second image selected by the user from the plurality of images of the target model at the current time, or a second image selected by the user at an earlier time, is acquired by the image acquisition unit of the electronic device, and the second image selected at the current time from the plurality of images of the target model, or the second image selected by the user at the earlier time, is used as display data.

In some embodiments of the present disclosure, if the electronic device switches to the first mode, when the target model has finished loading and a user is detected, the image acquisition unit of the electronic device acquires a second image generated by the target model based on a target image selected by the user from the plurality of images of the target model at the current time, or a target image selected by the user at an earlier time, and based on a user action. The second image is a dynamic image that changes following the user action, and the dynamic second image is used as display data.

In some embodiments of the present disclosure, third-party application software running on the electronic device (for example, video software, conferencing software, or video processing software) or software built into the electronic device (such as a camera application) may invoke display data corresponding to the dynamic second image for display.

In some embodiments of the present disclosure, when switching to a first mode of the electronic device, whether a target model has finished loading is used to determine whether an image acquisition unit of the electronic device acquires the first image or the second image. If the target model has not finished loading, the first image is acquired by the image acquisition unit of the electronic device; and, if the target model has finished loading and a user is detected, the image acquisition unit of the electronic device acquires the second image generated by the target model based on a user action and a target image selected by the user from among a plurality of images. So that a virtual first image or second image replaces a real image of an environment of the electronic device, thereby improving user privacy while enhancing user experience.

In some embodiments of the present disclosure, the target model includes a first model. When the target model has been loaded, an image acquisition unit of the electronic device acquiring the second image, includes:
if the first model has been loaded, the first model determining the second image from among a plurality of stored images and providing the second image to the image acquisition unit.

In some embodiments of the present disclosure, when an electronic device switches to a first mode and a first model has finished loading, the first model acquires, from a plurality of stored images, a target image as a second image, and provides the second image to an image acquisition unit.

The first model, based on a previously used second image, acquires from the plurality of images a target image previously selected by a user, so as to provide the target image as the second image to the image acquisition unit; and the second image is used as display data.

In some embodiments of the present disclosure, when the electronic device switches to the first mode and if the first model has finished loading and a user is detected, the first model acquires the second image based on user characteristics from the plurality of stored images and provides the second image as display data.

The first model, based on user characteristics such as gender, age, and interests, acquires, from the plurality of stored images, a target image matching the user, and, based on action features of the user, derives a dynamic second image, and provides the dynamic second image to the image acquisition unit of the electronic device.

In some embodiments of the present disclosure, display data corresponding to the second image may be displayed by a built-in application of the electronic device; or display data corresponding to the second image may be invoked for display by a third-party application running on the electronic device.

In some embodiments of the present disclosure, when an electronic device switches to a first mode and if a first model has finished loading, a second image is acquired, based on the first model, from a plurality of stored images, provided to an image acquisition unit of the electronic device, and displayed as display data, so that a virtual second image replaces an image of an real environment of the electronic device, thereby improving user data security while enhancing user experience.

In some embodiments of the present disclosure, a target model includes a first model and a second model. The first model has stored a plurality of images and the second model is configured to recognize user characteristics. If the target model has finished loading, an image acquisition unit of the electronic device acquires a second image, including: if the first model and the second model are both loaded, and if a user is detected, the target model generates the second image based on user characteristics recognized by the second model and a target image acquired by the first model from the plurality of stored images.

In some embodiments of the present disclosure, the user characteristics may include user age, user gender, user actions, and the like.

In some embodiments of the present disclosure, when an electronic device switches to a first mode, if a first model and a second model have both finished loading and the second model detects a user, a target model generates a second image based on user characteristics acquired by the second model and a target image acquired by the first model from a plurality of stored images based on the user characteristics.

By way of example, based on the second model recognizing a user's age, gender, and actions, the first model acquires, from the plurality of stored images, a target image matching the user's age and gender, and the target model generates a dynamic second image based on the user's actions and the target image.

In some embodiments of the present disclosure, the user characteristics may further include user identity characteristics.

In some embodiments of the present disclosure, the second model recognizes a user's identity and actions, and the first model acquires, based on the user's identity characteristics, a target image used by the user at an earlier time; and the target model generates a dynamic second image based on the target image used at the earlier time and the user's actions.

If no user is detected, the target model determines the second image from the plurality of stored images.

In some embodiments of the present disclosure, when the electronic device switches to the first mode, if the first model and the second model have both finished loading and the second model does not detect a user, the first model acquires historical data in the electronic device from the plurality of stored images and, based on the historical data, acquires, from the plurality of stored images, an image having the highest usage frequency as the second image.

In some embodiments of the present disclosure, if the first model and the second model have both finished loading and the second model still does not detect a user after a preset time, the second model is unloaded.

In some embodiments of the present disclosure, when the electronic device switches to the first mode, and if the first model and the second model have both finished loading, whether a user is detected is used to determine the second image. If a user is detected, a dynamic second image is generated based on user characteristics and a target image acquired by the first model; if no user is detected, the target image acquired by the first model is determined as the second image, so that display data corresponding to the dynamic second image or a static second image replaces an image of an environment of the electronic device, thereby improving user privacy; if a user is not detected within a preset time, the loaded second model is unloaded so as to improve utilization of system resources.

In some embodiments of the present disclosure, the method further includes: after displaying the second image, if a user is not detected for longer than a preset time, displaying the first image.

In some embodiments of the present disclosure, an image acquisition unit of the electronic device acquires a second image to be used as display data; if display data corresponding to the second image is invoked for display by third-party application software running on the electronic device or by software built into the electronic device, if a user is not detected after a preset time, the image acquisition unit of the electronic device acquires a preloaded first image as data, and display data corresponding to the first image is invoked for display by the third-party application software running on the electronic device or by the software built into the electronic device.

By way of example, when display data corresponding to the second image is displayed via video-conferencing software, if a user is still not detected after 5 s, a first image preloaded in an on-screen display (OSD) is acquired via a camera of a laptop computer, the preloaded first image is used as display data, and the video conference displays the first image by invoking the display data.

In some embodiments of the present disclosure, when display data corresponding to the second image is displayed by a built-in application of the electronic device or by a third-party application running on the electronic device, if a user is still not detected after a preset time, the image acquisition unit of the electronic device acquires the preloaded first image, and display data corresponding to the first image is displayed by the built-in application of the electronic device or by the third-party application running on the electronic device, so that the preloaded first image replaces a real image of an environment of the electronic device, thereby improving user privacy.

In some embodiments of the present disclosure, the method further includes: in response to switching to a second mode of the electronic device, initiating loading of a target model; or, in response to switching from a third mode of the electronic device to the first mode, loading the target model.

The target model is configured to determine a second image and to provide the second image to an image acquisition unit.

In some embodiments of the present disclosure, in response to switching to the second mode of the electronic device, loading of the target model is initiated. It is understood that, in response to switching to the second mode of the electronic device, a real image of an environment of the electronic device is acquired via the image acquisition unit of the electronic device and display data of the real image is displayed by a built-in application of the electronic device or by third-party application software running on the electronic device, while the target model is loaded. After a preset time following completion of loading of the target model, if the first mode of the electronic device has not been entered, the loaded target model is released.

In some embodiments of the present disclosure, in response to switching from the third mode of the electronic device to the first mode, the target model is loaded. It is understood that, after switching a position selector switch of the electronic device from a position corresponding to the third mode to a position corresponding to the first mode by touch input or by toggling the switch, the target model is loaded. Because loading the target model requires waiting time, a preloaded first image is first acquired via the image acquisition unit of the electronic device and the preloaded first image is displayed by a built-in application of the electronic device or by third-party application software running on the electronic device. If loading of the target model is completed, a second image is acquired based on the target model and sent to the image acquisition unit, and the second image is displayed by the built-in application of the electronic device or by the third-party application software running on the electronic device.

As disclosed herein, in response to switching to a second mode of an electronic device, loading of a target model is initiated so that, when switching to a first mode of the electronic device, display data of a second image acquired based on user characteristics and a target image is displayed; if a preset time has elapsed after completion of loading of the target model and the first mode of the electronic device has not been entered, the loaded target model is unloaded so as to improve utilization of system resources; in response to switching from a third mode of the electronic device to the first mode, display data of a preloaded first image is displayed first so as to address display stuttering that occurs during loading of the target model; after completion of loading of the target model, the target model generates the second image based on the user characteristics and a target image corresponding to the user characteristics and provides the second image to an image acquisition unit so that display data of the second image is displayed, thereby improving user privacy while enhancing user experience.

In some embodiments of the present disclosure, the method further includes: in response to switching to the first mode of the electronic device, displaying the first image on a display screen of the electronic device.

In some embodiments of the present disclosure, after switching to the first mode of the electronic device via touch input or by toggling a position selector switch, an icon corresponding to the first mode is displayed on the display screen of the electronic device, and, at the same time, display data corresponding to the first image is displayed by a built-in application of the electronic device or by a third-party application running on the electronic device. The built-in application of the electronic device or the third-party application running on the electronic device is displayed on the display screen of the electronic device.

In some embodiments of the present disclosure, by displaying a first image in place of an actual environmental image of the electronic device, user privacy is improved while user experience is enhanced.

In some embodiments of the present disclosure, the method further includes: if a first number of users is detected, determining a target user, acquiring, by a target model, characteristics of the target user, and determining the second image based on the characteristics of the target user.

In some embodiments of the present disclosure, the first number may include one user or a plurality of users.

If the first number represents only one user, the only one user is determined as the target user; and, if the first number represents a plurality of users, a user closest to the electronic device is determined as the target user.

In some embodiments of the present disclosure, while the target model acquires characteristics of the target user, a target image is determined from a plurality of stored images based on the user characteristics, and the target model generates the second image based on the user characteristics and the target image.

Alternatively, the target model acquires characteristics of a second number of users and determines, based on the characteristics of the second number of users, a respective second image corresponding to each user. The second number is less than or equal to the first number.

In some embodiments of the present disclosure, when a first number represents one user, a second number also represents one user. A target model acquires characteristics of the user and, based on the user characteristics, determines a target image from a plurality of stored images. The target model generates a second image based on the user characteristics and the target image.

In some embodiments of the present disclosure, when the first number represents a plurality of users, identity information of each user is acquired. Among the first number of users, users having registration information or login information present on the electronic device are determined as the second number of users.

The target model acquires characteristics of each user of the second number of users and, based on the characteristics of each user, determines a respective target image for each user from a plurality of stored images; and, the target model generates the second number of second images based on the characteristics of each user of the second number of users and the corresponding target image.

In some embodiments of the present disclosure, when the first number of users is one user, the user is determined as a target user; and, when the first number of users is a plurality of users, a user closest to the electronic device is determined as the target user. While the target model acquires characteristics of the target user, a target image is determined from the plurality of stored images based on the user characteristics, and the target model generates the second image based on the user characteristics and the target image. When the second number of users is a plurality of users, the target model generates a respective second image corresponding to each user, so that a virtual second image replaces a real image of the user, thereby improving user privacy while enhancing user experience.

An exemplary application of the method for determining an image for display provided by some embodiments of the present disclosure in an actual scenario is described below.

Currently, personal computers (PCs) include only two positions of a position selector switch, including an ON position and an OFF position, i.e., corresponding respectively to an ON model and an OFF model. When the position selector switch is in the ON position, the ON model is loaded so that a camera of the PC is in an ON state to perform data acquisition; and, when the position selector switch is in the OFF position, the OFF model is loaded so that a built-in camera of the PC is in an OFF state.

In view of the configuration of PC-side camera position selector switches in the existing technology, the present disclosure, on the basis of the existing ON and OFF positions, adds a virtual-person position, i.e., a corresponding virtual-person model is added. When switched to the virtual-person position, the corresponding virtual-person model is loaded, and, based on the virtual-person model, the camera is controlled to acquire user actions. In combination with a user selection among a plurality of virtual persons included in the virtual-person model, a dynamic virtual person is generated to replace a user image, thereby improving user privacy while enhancing user experience.

FIG. 3B illustrates a schematic diagram of a position selector switch in accordance with some embodiments of the present disclosure. In one embodiment, when switching to the OFF position of the PC, a close icon 301 is displayed on a display screen of the PC. FIG. 3A illustrates a schematic diagram of a position selector switch in accordance with some embodiments of the present disclosure, where, when switching to the ON position of a PC camera, an open icon 302 is displayed on the display screen of the PC.

In some embodiments of the present disclosure, a virtual-person position is further provided. The PC may be switched from the ON position to the virtual-person position or from the OFF position to the virtual-person position.

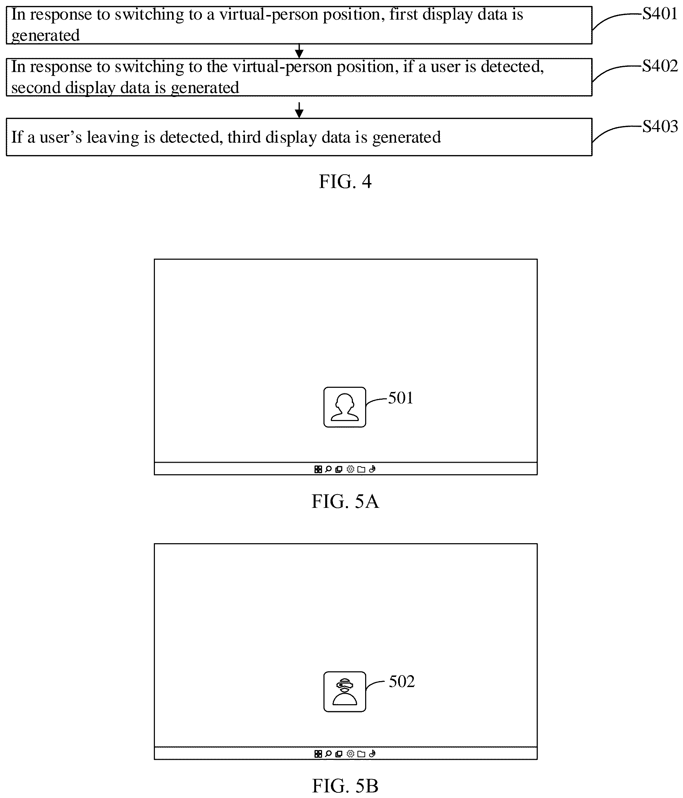

FIG. 4 illustrates a schematic flowchart for implementing a virtual-person position of a position selector switch in accordance with some embodiments of the present disclosure, the flow including steps S401 to S403. The steps shown in FIG. 4 are described with reference to FIG. 4.

Step S401: in response to switching to the virtual-person position, first display data is generated.

In some embodiments of the present disclosure, the virtual-person position may be entered by a hardware position selector switch provided on the PC, or by a shortcut key. FIG. 5A illustrates a schematic diagram of the virtual-person position in accordance with some embodiments of the present disclosure. When switched to the virtual-person position, a first virtual-person icon 501 is displayed on a display screen of the PC.

In some embodiments of the present disclosure, a virtual-person model corresponding to the virtual-person position includes a pattern model and a human-body detection model. The pattern model includes a plurality of virtual persons, and the human-body detection model is configured to acquire user actions.

In some embodiments of the present disclosure, when switching from the ON position to the virtual-person position, the pattern model is loaded upon switching to the ON position, and the human-body detection model is loaded upon switching to the virtual-person position; and, if the pattern model has not finished loading and the virtual-person position is entered, a preset image is transmitted as the first display data, i.e., a first image, to a transmission channel of a camera, the preset image including an image stored in an on-screen display (OSD). FIG. 5B illustrates a schematic diagram of the virtual-person position in accordance with some embodiments of the present disclosure, where 502 denotes the preset image.

In some embodiments of the present disclosure, first display data may be displayed in real time by a built-in camera application of the PC, or third-party software (for example, video software, conferencing software, video processing software, and the like) may invoke the first display data in a transmission channel of a camera to display the first display data.

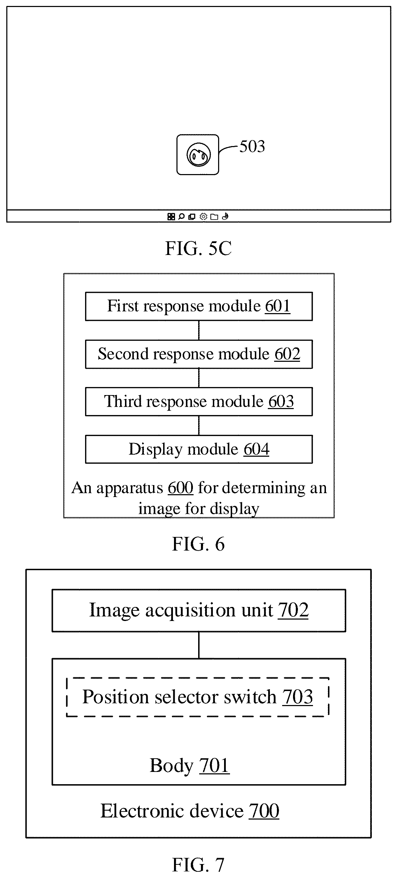

In some embodiments of the present disclosure, when switching from the ON position to the virtual-person position and within a preset time after completion of loading of a pattern model in the ON mode, a target image selected by a user from among a plurality of images of the pattern model is used as the first display data and transmitted to the transmission channel of the camera, and a human-body detection model is loaded. FIG. 5C illustrates a schematic diagram of the virtual-person position in accordance with some embodiments of the present disclosure, where 503 denotes the target image selected by the user.

In some embodiments of the present disclosure, if the pattern model has completed loading in the ON position but the virtual-person position is not entered within the preset time, the pattern model is released so as to reduce occupation of system resources.

In some embodiments of the present disclosure, when switching directly from the OFF position to the virtual-person position, while a preset image is transmitted as the first display data to the transmission channel of the camera, the pattern model and the human-body detection model are loaded. After completion of loading of the pattern model, a target image selected by the user is transmitted to the transmission channel of the camera as display data.

Step S402: in response to switching to the virtual-person position, if a user is detected, second display data, i.e., a second image, is generated.

In some embodiments of the present disclosure, if a user is detected and the human-body detection model and the pattern model have finished loading, second display data is generated based on a target image selected by the user and user actions, and is transmitted to a transmission channel of a camera.

In some embodiments of the present disclosure, if a user is detected and the pattern model has finished loading but the human-body detection model has not finished loading, the target image selected by the user is transmitted to the transmission channel of the camera as the second display data; and, until the human-body detection model has finished loading and the user is detected, second display data is generated based on the target image and the user actions and transmitted to the transmission channel of the camera.

In some embodiments of the present disclosure, if the human-body detection model and the pattern model have finished loading and no user is detected within a first preset time, the human-body detection model is released.

Step S403: if a user's leaving is detected, third display data is generated.

In some embodiments of the present disclosure, if in the virtual-person position, a user's leaving is detected, third display data is generated based on the user's actions at the time of leaving and the target image and is transmitted to the transmission channel of the camera. Alternatively, a preset image or the target image is transmitted to the transmission channel of the camera as the third display data.

In some embodiments of the present disclosure, when, after the user leaves, no user is detected within a second preset time, the pattern model and the human-body detection model are released, and the preset image is transmitted to the transmission channel of the camera as the third display data.

The image or the display data may be a static image or a dynamic image.

In some embodiments of the present disclosure, by adding a hardware virtual-person position, when a user desires to substitute a virtual person for the user's appearance, user privacy and data security are improved; by substituting a preset image for the user's appearance during loading of a virtual-person model, stuttering during the loading wait or inadvertent exposure of the real appearance is addressed, thereby enhancing user privacy while improving user experience; and, by unloading the virtual-person model if a user's leaving is detected and no user is detected again within a preset time, utilization efficiency of system resources is improved.

Based on the foregoing embodiments, some embodiments of the present disclosure provide an apparatus for determining an image for display. The apparatus includes respective units and, within the units, respective modules, and may be implemented by a processor in an electronic device; alternatively, the apparatus may be implemented by dedicated logic circuitry. During implementation, the processor may be a Central Processing Unit (CPU), a Microprocessor Unit (MPU), a Digital Signal Processor (DSP), or a Field Programmable Gate Array (FPGA), etc.

FIG. 6 illustrates a schematic structure diagram of an apparatus for determining an image for display in accordance with some embodiments of the present disclosure. As shown in FIG. 6, the apparatus 600 includes: a first response module 601, a second response module 602, a third response module 603, and a display module 604. The first response module 601 is configured to, in response to switching to a first mode of an electronic device, cause an image acquisition unit of the electronic device to acquire a first image or a second image, where the first image or the second image is different from an image of an environment of the electronic device; the second response module 602 is configured to, in response to switching to a second mode of the electronic device, cause the image acquisition unit to acquire an image of the environment of the electronic device; the third response module 603 is configured to, in response to switching to a third mode of the electronic device, place the image acquisition unit in an OFF state; and, the display module 604 is configured to cause the image acquisition unit to output an acquired image for display, or to output the acquired image to an application of the electronic device so that the application displays the image.

In some embodiments of the present disclosure, the apparatus 600 for determining an image for display further includes an acquisition module (not shown), configured to: if an electronic device does not satisfy a first condition, cause an image acquisition unit of the electronic device to acquire a first image; and, if the electronic device satisfies the first condition, cause the image acquisition unit to acquire a second image, where the second image is different from the first image.

In some embodiments of the present disclosure, the first condition includes that the electronic device has loaded a target model; the acquisition module is further configured to: if the target model is not loaded, cause the image acquisition unit of the electronic device to acquire the first image; and, if the target model is loaded, cause the image acquisition unit of the electronic device to acquire the second image, where the target model is used to determine the second image and to provide the second image to the image acquisition unit, and where the second image includes an image stored by the target model or an image generated based on user characteristics.

In some embodiments of the present disclosure, the target model includes a first model. The acquisition module is further configured such that, if the target model is loaded, the image acquisition unit of the electronic device acquires the second image. If the first model is loaded, the first model determines the second image from a plurality of stored images and provides the second image to the image acquisition unit.

In some embodiments of the present disclosure, the target model includes a first model and a second model. The first model has stored a plurality of images and the second model is configured to recognize user characteristics. The acquisition module is further configured such that, the first model and the second model being both loaded: if a user is detected, the target model generates a second image based on user characteristics recognized by the second model and a target image acquired by the first model from the plurality of stored images; and, if no user is detected, the target model determines the second image from the plurality of stored images.

In some embodiments of the present disclosure, the display module 604 is further configured to, after displaying the second image, display the first image if a user is not detected for longer than a preset time.

In some embodiments of the present disclosure, the second response module 602 is further configured to, in response to switching to a second mode of the electronic device, initiate loading of a target model; and, the first response module 601 is further configured to, in response to switching from a third mode of the electronic device to the first mode, load the target model. The target model is configured to determine the second image and to provide the second image to an image acquisition unit.

In some embodiments of the present disclosure, the display module 604 is further configured to, in response to switching to the first mode of the electronic device, display the first image on a display screen of the electronic device.

In some embodiments of the present disclosure, the apparatus 600 for determining an image for display further includes a determination module (not shown). The determination module is configured to: if a first number of users is detected, determine a target user, acquire, by a target model, characteristics of the target user, and determine the second image based on the user characteristics of the target user; or acquire, by the target model, characteristics of a second number of users, and determine, based on the characteristics of the second number of users, a respective second image corresponding to each user, where the second number is less than or equal to the first number.

The foregoing description of the apparatus embodiments is similar to the description of the method embodiments above and provides advantages similar to those of the method embodiments. In some embodiments of the present disclosure, the functions provided by the apparatus or the modules included therein may be configured to execute the methods described in the method embodiments above. Technical details not disclosed in the apparatus embodiments of the present disclosure are to be understood with reference to the descriptions of the method embodiments of the present disclosure.

It is to be noted that, in the embodiments of the present disclosure, when the foregoing methods are implemented in the form of software functional modules and are sold or used as an independent product, they may also be stored in a computer-readable storage medium. Based on this understanding, the technical solutions of the embodiments of the present disclosure, in essence or at least the portions contributing to the related art, may be embodied as a software product stored in a storage medium and including instructions for causing an electronic device (which may be a personal computer, a server, or a network device, among others) to execute all or part of the methods described in the various embodiments of the present disclosure. The storage medium may include, for example, a USB flash drive, a portable hard drive, Read Only Memory (ROM), a magnetic disk, an optical disk, and other media that may store program code. Thus, the embodiments of the present disclosure are not limited to any particular hardware, software, or firmware, or any combination among hardware, software, and firmware.

According to some embodiments of the present disclosure, an electronic device is provided. The electronic device includes a body and an image acquisition unit. The image acquisition unit is arranged in the body, and the body includes a position selector switch movable among different positions. In response to a user moving the position selector switch to a first position, the electronic device operates in a first mode, and the image acquisition unit of the electronic device acquires a first image or a second image, the first image or the second image being different from an image of an environment of the electronic device; in response to the user moving the position selector switch to a second position, the electronic device operates in a second mode, and the image acquisition unit of the electronic device acquires an image of the environment of the electronic device; and, in response to the user moving the position selector switch to a third position, the electronic device operates in a third mode, and the image acquisition unit of the electronic device is in an OFF state.

According to some embodiments of the present disclosure, a computer-readable storage medium is provided. A computer program is stored on the computer-readable storage medium, where the computer program, when executed by a processor, implements part or all of the steps of the method described above. The computer-readable storage medium may be transitory or non-transitory.

According to some embodiments of the present disclosure, a computer program is provided, the computer program including computer-readable code. When the computer-readable code runs on an electronic device, a processor in the electronic device executes the code to implement part or all of the steps of the method described above.

According to some embodiments of the present disclosure, a computer program product is provided. The computer program product includes a non-transitory computer-readable storage medium storing a computer program, where the computer program, when read and executed by a computer, implements part or all of the steps of the method described above. The computer program product may be implemented by hardware, software, or a combination thereof. In some embodiments of the present disclosure, the computer program product is embodied as a computer storage medium; and, in other embodiments, the computer program product is embodied as a software product, for example, a Software Development Kit (SDK).

It should be noted that the foregoing descriptions of the respective embodiments tend to emphasize differences among the embodiments, and features that are the same or similar may be cross-referenced. The foregoing descriptions of the device, storage medium, computer program, and computer program product embodiments are similar to the descriptions of the method embodiments above and provide advantages similar to those of the method embodiments. Technical details not disclosed in the device, storage medium, computer program, and computer program product embodiments of the present disclosure are to be understood with reference to the descriptions of the method embodiments of the present disclosure.

FIG. 7 illustrates a schematic diagram of hardware of an electronic device in accordance with some embodiments of the present disclosure. As shown in FIG. 7, hardware of the electronic device 700 includes: a body 701 and an image acquisition unit 702. The image acquisition unit 702 is arranged on the body 701, and the body 701 includes a position selector switch 703 movable among different positions.

In response to a user moving the position selector switch 703 to a first position, the electronic device 700 operates in a first mode, and an image acquisition unit 702 of the electronic device 700 acquires a first image or a second image, the first image or the second image being different from an image of an environment of the electronic device 700; in response to the user moving the position selector switch 703 to a second position, the electronic device 700 operates in a second mode, and the image acquisition unit 702 of the electronic device 700 acquires an image of the environment of the electronic device 700; and, in response to the user moving the position selector switch 703 to a third position, the electronic device 700 operates in a third mode, and the image acquisition unit 702 of the electronic device 700 is in an OFF state.

The first position, the second position, and the third position may form a linear direction, for example parallel to one side of the body, or may form a circular direction or an irregular direction. The order in which the first position, the second position, and the third position are arranged is not limited, and the position selector switch may be moved from the first position to the second position and then to the third position, or from the first position first to the third position and then to the second position.

In some embodiments, a position selector switch is movable to two positions, i.e., an image acquisition unit ON position and an image acquisition unit OFF position. When the position selector switch is moved to the image acquisition unit ON position, a virtual-person mode may be enabled by a trigger operation via a software settings interface so that the electronic device is in the first mode. When the user disables the virtual-person mode, the electronic device is in the second mode. Alternatively, the settings interface may include enable controls for the first mode and the second mode. When the position selector switch is moved to the image acquisition unit ON position, the user may enable the first mode or enable the second mode so that the electronic device is in the first mode or the second mode.

According to some embodiments of the present disclosure, a computer storage medium is provided. The computer storage medium stores one or a plurality of programs that may be executed by one or a plurality of processors to perform part or all of the steps of any of the above embodiments of the method.

It should be noted that the foregoing descriptions of the storage medium and device embodiments are similar to the descriptions of the method embodiments above and provide advantages similar to those of the method embodiments. Technical details not disclosed in the storage medium and device embodiments of the present disclosure are to be understood with reference to the descriptions of the method embodiments of the present disclosure.

In some embodiments of the present disclosure, the foregoing processor may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It is understood that other electronic components capable of implementing the foregoing processor functions may also be used, and the embodiments of the present disclosure are not specifically limited thereto.

In some embodiments of the present disclosure, the foregoing computer storage medium/memory may be Read Only Memory (ROM), Programmable Read-Only Memory (PROM), Erasable Programmable Read-Only Memory (EPROM), Electrically Erasable Programmable Read-Only Memory (EEPROM), Ferroelectric Random Access Memory (FRAM), flash memory, magnetic surface storage, an optical disk, or Compact Disc Read-Only Memory (CD-ROM), and other storage media; or may be various terminals that include one or any combination of the foregoing memories, such as mobile phones, computers, tablet devices, and personal digital assistants, and the like.

It should be understood that references throughout the specification to "an embodiment" or "one embodiment" mean that a particular feature, structure, or characteristic related to the embodiment is included in at least one embodiment of the present disclosure. Accordingly, occurrences of the phrases "in one embodiment" or "in an embodiment" throughout the specification are not necessarily referring to the same embodiment. In addition, these particular features, structures, or characteristics may be combined in any suitable manner in one or more embodiments. It should be understood that, in the various embodiments of the present disclosure, the numbering assigned to the foregoing steps/processes does not imply an order of execution. The order of execution of the steps/processes should be determined by their functions and inherent logic, and should not be construed as limiting the implementation of the embodiments of the present disclosure. The serial numbers of the embodiments of the present disclosure are for description only and do not indicate superiority or inferiority.

It is to be noted that, as used herein, the terms "include," "including," or any other variation thereof are intended to cover non-exclusive inclusion, so that a process, method, article, or apparatus that includes a series of elements not only includes those elements, but may also include other elements not expressly listed, or elements inherent to such process, method, article, or apparatus. Without further limitation, an element defined by the phrase "including a ..." does not exclude the presence, in the process, method, article, or apparatus that includes the element, of additional identical elements.

In various embodiments provided by the present disclosure, it should be understood that the disclosed apparatuses and methods may be implemented in other ways. The apparatus embodiments described above are merely illustrative. For example, the division of units is only a logical functional division, and other divisions may be adopted in actual implementation. A plurality of units or components may be combined, integrated into another system, certain features may be omitted, or not performed. In addition, coupling among the components shown or discussed-whether coupling, direct coupling, or communication connection-may be through one or more interfaces. Indirect coupling or communication connections of devices or units may be electrical, mechanical, or other forms.

Units described as separate components above may or may not be physically separate, and components shown as a unit may or may not be physical units. They may be colocated or distributed across a plurality of network nodes. Some or all of the units may be selected as required to achieve the objectives of the embodiments.

Additionally, in the embodiments of the present disclosure, the respective functional units may all be integrated into a single processing unit, each unit may be implemented separately as an individual unit, or two or more units may be integrated into one unit. The integrated unit may be implemented in hardware, or as a combination of hardware and software functional units. Those of ordinary skill in the art will understand that all or part of the steps of the foregoing method embodiments may be implemented by hardware executing program instructions. The foregoing program may be stored in a computer-readable storage medium and, when executed, performs the steps of the method embodiments described above. The storage medium may include, for example, a mobile storage device, Read Only Memory (ROM), a magnetic disk, an optical disk, and other media capable of storing program code.

Alternatively, when the integrated units described above are implemented as software functional modules and are sold or used as an independent product, they may also be stored in a computer-readable storage medium. Based on this understanding, the technical solutions of the present disclosure, in essence or at least those portions that contribute to the related art, may be embodied as a software product stored in a storage medium and including a plurality of instructions for causing an electronic device (which may be a personal computer, a server, or a network device, among others) to execute all or part of the methods described in the embodiments of the present disclosure. The foregoing storage medium may include, for example, a mobile storage device, Read Only Memory (ROM), a magnetic disk, an optical disk, and other media that may store program code.

The foregoing description is merely illustrative of embodiments of the present disclosure and is not intended to limit the scope of protection of the present disclosure. Any changes or substitutions that those skilled in the art may readily contemplate within the scope of the present disclosure as disclosed are intended to be encompassed within the scope of protection of the present disclosure.

## Claims

1. A method for determining an image for display, applied to an electronic device, the method comprising:
in response to switching to a first mode of the electronic device, acquiring, by an image acquisition unit of the electronic device, a first image or a second image, the first image or the second image being different from an image of an environment of the electronic device;
in response to switching to a second mode of the electronic device, acquiring, by the image acquisition unit, the image of the environment of the electronic device;
in response to switching to a third mode of the electronic device, the image acquisition unit being in an OFF state; and
outputting, by the image acquisition unit, an acquired image for display, or outputting, by the image acquisition unit, the acquired image to an application running on the electronic device, such that the application displays the acquired image.

2. The method according to claim 1, wherein acquiring the first image or the second image in response to switching to the first mode, comprises:
in response to the electronic device being un-satisfy a first condition, acquiring, by the image acquisition unit, the first image; and
in response to the electronic device satisfying the first condition, acquiring, by the image acquisition unit, the second image, the second image being different from the first image.

3. The method according to claim 2, wherein the first condition comprises a target model being loaded on the electronic device, the target model being configured to determine the second image and to provide the second image to the image acquisition unit, wherein:
in response to the target model being unloaded, the image acquisition unit acquires the first image; and
in response to the target model being loaded, the image acquisition unit acquires the second image, the second image comprising an image stored in the target model or an image generated based on user characteristics.

4. The method according to claim 3, wherein:
the target model comprises a first model; and
in response to the target model being loaded, acquiring the second image by the image acquisition unit comprises: when the first model is loaded, determining, by the first model, the second image from a plurality of stored images and providing the second image to the image acquisition unit.

5. The method according to claim 3, wherein:
the target model comprises a first model and a second model, the first model storing a plurality of images, and the second model being configured to recognize user characteristics; and
in response to the target model being loaded, acquiring the second image by the image acquisition unit comprises:
in response to the first model and the second model being both loaded, and a user is detected, generating, by the target model, the second image, based on the user characteristics recognized by the second model and a target image acquired by the first model from the plurality of images stored in the first model; and
in response to no user being detected, determining, by the target model, the second image from the plurality of images stored in the first model.

6. The method according to claim 1, further comprising: after displaying the second image, in response to no user being detected for longer than a preset time, displaying the first image.

7. The method according to claim 1, further comprising:
in response to switching to the second mode of the electronic device, initiating loading of a target model, the target model being configured to determine the second image and to provide the second image to the image acquisition unit; or
in response to switching from a third mode of the electronic device to the first mode, loading the target model.

8. The method according to claim 1, further comprising: in response to switching to the first mode of the electronic device, displaying the first image on a display screen of the electronic device.

9. The method according to claim 1, further comprising:
in response to a first number of users being detected, determining a target user, acquiring a characteristic of the target user by a target model, and determining the second image based on the characteristic of the target user; or
acquiring, by the target model, characteristics of a second number of users, and determining, based on the characteristics of the second number of users, a respective second image corresponding to each user, wherein the second number is less than or equal to the first number.

10. An electronic device, comprising:
a body and an image acquisition unit configured at the body, wherein
the body comprises a position selector switch that is switchable among different positions, wherein:
in response to the position selector switch being moved to a first position, the electronic device operates in a first mode, and the image acquisition unit acquires a first image or a second image, the first image or the second image being different from an image of an environment of the electronic device;
in response to the position selector switch being moved to a second position, the electronic device operates in a second mode, and the image acquisition unit acquires the image of the environment of the electronic device; and
in response to the position selector switch being moved to a third position, the electronic device operates in a third mode, and the image acquisition unit is in an OFF state.

11. The electronic device according to claim 10, further comprising:
a storage medium storing a target model, the target model being configured to determine the second image and provide the second image to the image acquisition unit; and
a processor configured to, in response to switching to the first mode, cause the image acquisition unit to:
acquire, in response to the target model being unloaded on the electronic device, the first image; and
acquire, in response to the target model is loaded on the electronic device, the second image.

12. The electronic device according to claim 10, further comprising:
a storage medium storing a target model, the target model being configured to determine the second image and to provide the second image to the image acquisition unit; and
a processor, the processor being configured to:
in response to switching to the second mode of the electronic device, initiate loading of the target model; or
in response to switching from the third mode of the electronic device to the first mode, load the target model.

13. The electronic device according to claim 10, further comprising:
a storage medium storing a target model; and
a processor, the processor being configured to:
in response to a first number of users being detected, determine a target user, cause the target model to acquire a characteristic of the target user, and determine the second image based on the characteristic of the target user; or
cause the target model to acquire characteristics of a second number of users and determine, based on the characteristics of the second number of users, a respective second image corresponding to each user, wherein the second number is less than or equal to the first number.

14. The electronic device according to claim 11, wherein
the target model comprises a first model, the first model storing a plurality of images; and
the processor is configured to, in response to switching to the first mode and when the first model is loaded on the electronic device, cause the first model to determine the second image from the plurality of images and provide the second image to the image acquisition unit.

15. The electronic device according to claim 11, wherein
the target model comprises a first model and a second model, the first model storing a plurality of images, and the second model being configured to recognize user characteristics; and
the processor is configured to:
in response to the first model and the second model being both loaded on the electronic device and a user is detected, cause the target model to generate the second image based on user characteristics recognized by the second model and a target image acquired by the first model from the plurality of images; and
response to no user being detected, cause the target model to determine the second image from the plurality of images.
